# EUROPÄISCHE PATENTSCHRIFT

(11) **EP 2 894 507 B1**
(45) Veröffentlichungstag und Bekanntmachung des Hinweises auf die Patenterteilung: **09.10.2019**
(21) Anmeldenummer: 15150928.8
(22) Anmeldetag: 13.01.2015
(51) Int. Cl.: G02B 23/10, G02B 27/34

(54) **Fernrohr mit Prismen-Umkehrsystem**
Telescope with prism inversion system
Télescope avec système d'inversion à prismes

(30) Priorität: 13.01.2014 AT 500212014
(43) Veröffentlichungstag der Anmeldung: 15.07.2015
(73) Patentinhaber: Swarovski-Optik KG., 6067 Absam (AT)
(72) Erfinder: Kurz, Patrick, 6170 Zirl (AT); Pernstich, Ludwig, 6063 Rum (AT); Salzburger, Thomas, 6020 Innsbruck (AT); Wachsmuth, Sebastian, 6020 Innsbruck (AT)
(74) Vertreter: Burger, Hannes

(56) Entgegenhaltungen:
- EP-A1- 2 345 865
- EP-A1- 2 378 245
- EP-A1- 2 557 450
- EP-A2- 2 469 318
- WO-A1-2006/100666
- DE-U1-202008 012 601
- US-A1- 2010 142 044

## Beschreibung

Die Erfindung betrifft ein terrestrisches Fernrohr mit einem Prismen-Umkehrsystem entsprechend dem Oberbegriff des Anspruches 1.

Fernrohre, die neben der reinen Beobachtung von entfernten Objekten auch eine Messung von Winkeln oder Strecken im Objektraum ermöglichen sollen, weisen dazu Absehen oder Strichplatten auf, die in der Zwischenbildebene des Strahlengangs angeordnet sind. Durch das Okular des Fernrohrs hindurch können so die Striche der Strichplatte und mit diesen überlagert das von dem Objektiv erzeugte Bild der entfernen Objekte scharf beobachtet werden. Bei Verwendung von Strichplatten mit entsprechender Skalierung der Abstände der Striche ist es möglich, bei Beobachtung von Objekten einer bekannten Größe deren Entfernung zu messen bzw. zumindest abzuschätzen. Für die Verwendung solcher Fernrohre unter ungünstigen Lichtverhältnissen bzw. Umgebungsbedingungen kann zur Kontraststeigerung zusätzlich auch eine Beleuchtung der Strichplatte vorgesehen sein. Das Dokument EP 1 653 271 B1 beschreibt beispielsweise ein Zielfernrohr mit einer Strichplatte bzw. einem Fadenkreuz bei dem die Strichplatte durch eine seitlich angeordnete Lichtquelle beleuchtet werden kann. Strichplatten die direkt in dem Strahlenverlauf des Beobachtungsstrahlenganges angeordnet sind, erweisen sich insofern als ungünstig, als an der Strichplattenoberfläche anhaftende Staubpartikel Streulicht hervorrufen können und so zu einer Beeinträchtigung der Bildqualität führen können. Außerdem sind solche Strichplatten im Beobachtungstrahlengang immer sichtbar.

In dem Dokument EP 2 378 245 A1 wird ein binokulares Beobachtungsgerät mit einem Laser-Entfernungsmesser beschrieben, wobei die Sende- und Empfangsstrahlengänge unter Verwendung von Teiler- bzw. Umlenkprismen mit dem Beobachtungsstrahlengang verbunden sind. Dabei wird außerdem eine Zielmarke in den Beobachtungsstrahlengang abgebildet.

Das Dokument WO 2006/100666 A1 beschreibt eine Zielvorrichtung für Waffen, wobei eine beleuchtete Zielmarke mit Hilfe von Strahlenteilerprismen in den Beobachtungsstrahlengang abgebildet werden kann. Die Zielmarke wird durch eine, ein Fadenkreuz darstellende, negative Maske gebildet. In dem Strahlengang zur Projektion des Bildes der Zielmarke ist außerdem eine Kollimator-Linse zum Fokussieren des Bildes ins Unendliche angeordnet.

Das Dokument DE 20 2008 012 601 U1 hat ein Zielfernrohr zum Gegenstand, wobei sowohl in der ersten Zwischenbildebene des Objektivs als auch in der zweiten Zwischenbildebene, nach den Linsen-Umkehrsystem eine Zielmarkenanordnung vorgesehen ist. Dabei hat die erste Zielmarkenanordnung ein Fadenkreuzstrichbild und die zweite Zielmarkenanordnung eine zentral angeordnete Punktzielmarke, wobei wenigstens eine schaltbare Beleuchtungseinrichtung vorgesehen ist, mit welcher die erste Zielmarkenanordnung und die zweite Zielmarkenanordnung in dem Strahlengang jeweils einzeln oder gemeinsam für den Beobachter durch Beleuchtung sichtbar gemacht werden können.

Das Dokument EP 2 557 450 A1 beschreibt ein Zielfernrohr für Waffen, bestehend aus einem Objektiv, einem Linsen-Umkehrsystem und einem Okular. Durch einen zwischen dem Objektiv und dem Linsen-Umkehrsystem angeordneten Strahlenteilerwürfel wird ein Teil des von dem Objektiv kommenden Lichts mit Hilfe von Linsen unterschiedlicher Brechkraft und durch weitere Abbildung über Spiegel zu dem Okular hin abgebildet. Der Beobachter erhält somit in seinem Sehfeld in einem Teilbereich ein Bild der beobachteten Umgebung mit einer unterschiedlichen Vergrößerung dargestellt.

Das Dokument US 2010/142044 A1 beschreibt ein binokulares Fernglas mit einer sogenannten Innenfokussierung. Ein zwischen den beiden Tuben mittig angeordneter Fokussierknopf ist mit jeweils einer Sekundärobjektivlinse wirkverbunden, sodass die Sekundärobjektivlinsen durch Verdrehen des Fokussierknopfs gleichzeitig in axialer Richtung der optischen Achsen verstellt werden können. In einem der beiden Beobachtungsstrahlengänge ist außerdem eine Strichplatte mit einer Skale angeordnet. Mithilfe eines im Bereich des Okulargehäuses angeordnetem Stellrings kann diese Strichplatte in axialer Richtung der optischen Achse verstellt werden, wodurch die Skale mit der Bildebene des Objektivs zu Deckung gebracht werden kann.

Es ist die Aufgabe der Erfindung ein Fernrohr mit einer Strichplatte mit verbesserter Bildqualität und kompaktem Aufbau zu schaffen.

Diese Aufgabe wird gelöst durch ein Fernrohr mit einem Objektiv, einem Okular und einem Prismen-Umkehrsystem, wobei in dem zwischen dem Objektiv und dem Okular verlaufenden Beobachtungs-Strahlengang das Prismen-Umkehrsystem angeordnet ist und das Fernrohr eine Projektionsoptik mit einem Strahlengang zur Abbildung eines Bildes einer Strichplatte in eine Brennebene des Okulars umfasst. Dabei ist der Strahlengang der Projektionsoptik durch einen Strahlenteiler in den Beobachtungs-Strahlengang eingekoppelt. Bei dem erfindungsgemäßen Fernrohr ist weiters vorgesehen, dass die Projektionsoptik eine Maske und eine Lichtquelle umfasst, wobei die Lichtquelle zur rückwärtigen Beleuchtung der Maske angeordnet ist. Die Maske wird vorteilhafterweise durch eine planparallele Glasplatte mit einer opaken Beschichtung gebildet, wobei die Glasplatte transparente Bereiche in der Form eines Negatives eines Musters einer Strichplatte (Strichbild) aufweist. Dies hat den Vorteil, dass damit ein Strichbild erzeugt werden kann, bei dem die Striche bzw. Linien und Liniennetze selbstleuchtend sind.

Vorteilhaft ist auch die Weiterbildung des Fernrohrs wonach der Strahlengang der Projektionsoptik einen ersten Hauptstrahl-Abschnitt und einen zweiten Hauptstrahl-Abschnitt aufweist und diese durch ein Umlenkprisma miteinander verbunden sind, wobei der erste Hauptstrahl-Abschnitt und der zweite Hauptstrahl-Abschnitt senkrecht bezüglich der optischen Achse des Objektivs ausgerichtet sind. Diese Ausgestaltung des Strahlengangs der Projektionsoptik hat den Vorteil eines kompakteren Aufbaus der Projektionsoptik, in dem deren Volumen in etwa auf eine Kreisscheibe um die optische Achse des Objektivs begrenzt werden kann. Dies begünstigt eine modulartige Strukturierung des Fernrohres in einem Objektivteil, einem Okularteil und einem dazwischen liegenden Mitteilteil mit der Projektionsoptik und dem Prismen-Umkehrsystem.

Gemäß einer vorteilhaften Weiterbildung des Fernrohrs ist vorgesehen, dass der Strahlenteiler an einem Übergangsbereich zwischen einem Koppelprisma der Projektionsoptik und dem Prismen-Umkehrsystem des Beobachtungsstrahlengangs ausgebildet ist. Dabei ist insbesondere vorgesehen, dass das Koppelprisma an einem Umlenkprisma des Prismen-Umkehrsystems angekittet ist und an einer Grenzfläche zwischen dem Koppelprisma und dem Umlenkprisma des Prismen-Umkehrsystems eine teildurchlässige Beschichtung ausgebildet ist. Von Vorteil ist dabei der dadurch erreichbare noch kompaktere Aufbau der Baugruppe aus Prismen-Umkehrsystem und Projektionsoptik.

Die Weiterbildung des Fernrohrs wonach die Projektionsoptik eine Fokussiereinrichtung umfasst, durch die die Lage der Bildebene der Abbildung des Strichbildes (Muster der Strichplatte der Maske) relativ zur Bildebenenlage des Objektivs bzw. zur Lage der Brennebene des Okulars verschoben werden kann, hat den Vorteil, dass damit ein Parallaxenausgleich bzw. ein Dioptrienausgleich erreicht werden kann.

Gemäß der Ausbildung des Fernrohrs wonach ein Bedienknopf zum Ein- und Ausschalten und zur Regelung der Helligkeit der Lichtquelle ausgebildet ist, hat den Vorteil, dass damit zwischen unterschiedlichen Benutzungsarten des Fernrohrs - für Messaufgaben oder für reine Beobachtung - gewechselt werden kann. Andererseits kann das Bild des Musters der Strichplatte bzw. der Maske an unterschiedliche Umgebungs-Lichtverhältnisse angepasst werden.

Besonders vorteilhaft ist auch die Ausbildung des Prismen-Umkehrsystems durch ein Porro-Prismensystem. Dieses umfasst ein erstes und ein zweites Umlenkprisma, wobei der Beobachtungsstrahlengang durch das erste Umlenkprisma von einem ersten Hauptstrahl-Abschnitt in einen zweiten Hauptstrahl-Abschnitt und von dem zweiten Hauptstrahl-Abschnitt in einen dritten Hauptstrahl-Abschnitt umgelenkt wird. Durch das zweite Umlenkprisma wird der Beobachtungsstrahlengang von dem dritten Hauptstrahl-Abschnitt in den vierten Hauptstrahl-Abschnitt und von dem vierten Hauptstrahl-Abschnitt in einen fünften Hauptstrahl-Abschnitt umgelenkt. Durch diese mehrfache Umlenkung ("Faltung") des Beobachtungsstrahlengangs wird vorteilhafterweise eine deutlich geringere Gesamtbaulänge des Fernrohrs erreicht.

Von Vorteil ist auch, dass das Koppelprisma an einer ersten Reflexionsfläche des zweiten Umlenkprismas angeordnet ist, wobei der zweite Hauptstrahl-Abschnitt des Strahlengangs der Projektionsoptik koaxial zu dem in dem zweiten Hauptumlenkprisma verlaufenden, vierten Hauptstrahl-Abschnittes des Beobachtungsstrahlenganges gerichtet ist.

Vorteilhaft ist auch eine alternative Ausführungsform, wonach das Koppelprisma an einer ersten Reflexionsfläche des ersten Umlenkprismas angeordnet ist, wobei der zweite Hauptstrahl-Abschnitt des Strahlengangs der Projektionsoptik koaxial zu dem in dem ersten Umlenkprisma verlaufenden zweiten Hauptstrahl-Abschnitt des Beobachtungs-Strahlengangs gerichtet ist.

Vorteilhaft ist auch die Weiterbildung des Fernrohrs wonach im Beobachtungsstrahlengang zwischen Objektiv und Prismen-Umkehrsystem eine Fokussiereinrichtung angeordnet ist.

Die Weiterbildung des Fernrohrs wonach das Okular ein Zoom-Linsen-System umfasst, hat den Vorteil, dass damit die Gesamtvergrößerung des Fernrohrs über einen vorgegebenen Bereich verstellbar ist. Die Anordnung des Zoom-Linsen-Systems in dem Okular hat den weiteren Vorteil, dass bei einer Veränderung der Vergrößerungseinstellung sich das Strichbild der Strichplatte bzw. der Maske in gleicher Weise mit dem Bild der entfernten Objekte mitverändert.

Zum besseren Verständnis der Erfindung wird diese anhand der nachfolgenden Figuren näher erläutert.

Es zeigen jeweils in stark vereinfachter, schematischer Darstellung:
- Fig. 1: das Optikschema eines erfindungsgemäßen Fernrohrs;
- Fig. 2: einen Querschnitt des Fernrohrs mit einer Blickrichtung parallel zur optischen Achse des Objektivs mit Details der Projektionsoptik;
- Fig. 3: einen Querschnitt des Prismen-Umkehrsystems mit der Projektionsoptik und dem Okular gemäß Fig. 2;
- Fig. 4: den okularseitigen Endbereich des Fernrohrs in perspektivischer Ansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

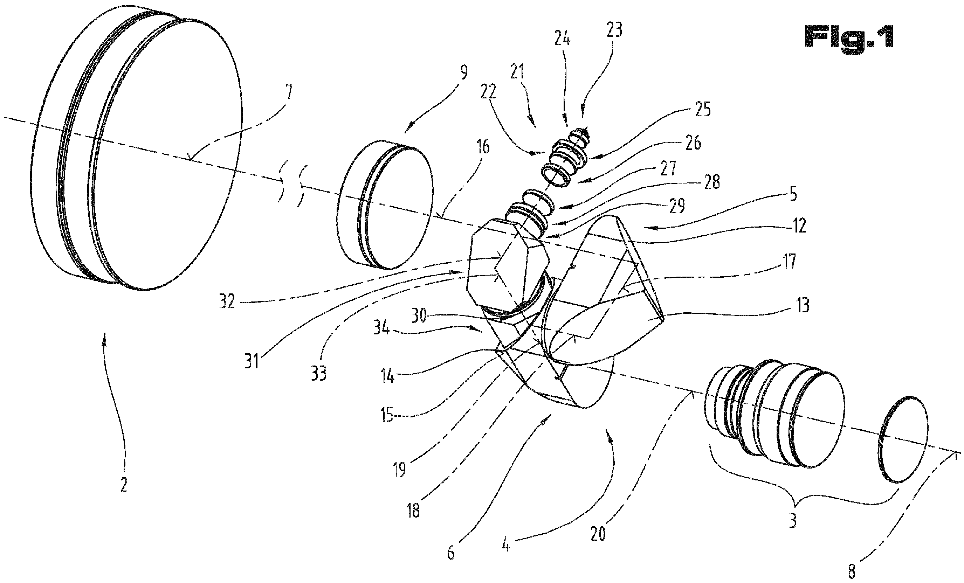

Die Fig. 1 zeigt das Optikschema eines erfindungsgemäßen Fernrohrs 1, insbesondere eines terrestrischen Teleskops.

Das Fernrohr 1 umfasst ein Objektiv 2 und ein Okular 3 und ein dazwischen angeordnetes Prismen-Umkehrsystem 4. Das Prismen-Umkehrsystem 4 ist gemäß diesem Ausführungsbeispiel durch ein Porro-Prismensystem erster Art gebildet. Das Prismen-Umkehrsystem 4 umfasst demnach ein erstes Umlenkprisma 5 und ein zweites Umlenkprisma 6. Aufgrund der Ausbildung des Prismen-Umkehrsystems 4 durch ein Porro-Prismensystem ist eine optische Achse 7 des Objektivs 2 relativ zu einer optischen Achse 8 des Okulars 3 parallel versetzt angeordnet.

In dem zwischen dem Objektiv 2 und dem Okular 3 sich erstreckenden Beobachtungsstrahlengang des Fernrohrs 1 ist zwischen dem Objektiv 2 und dem Prismen-Umkehrsystem 4 eine durch eine Linse gebildete Fokussiereinrichtung 9 angeordnet. Gemäß diesem Ausführungsbeispiel ist die Fokussiereinrichtung 9 durch eine sogenannte Barlow Linse gebildet.

Zur Vereinfachung und aus Gründen der besseren Übersichtlichkeit sind in den Figuren die Strahlengänge nur durch die entsprechenden Hauptstrahlen symbolisiert dargestellt.

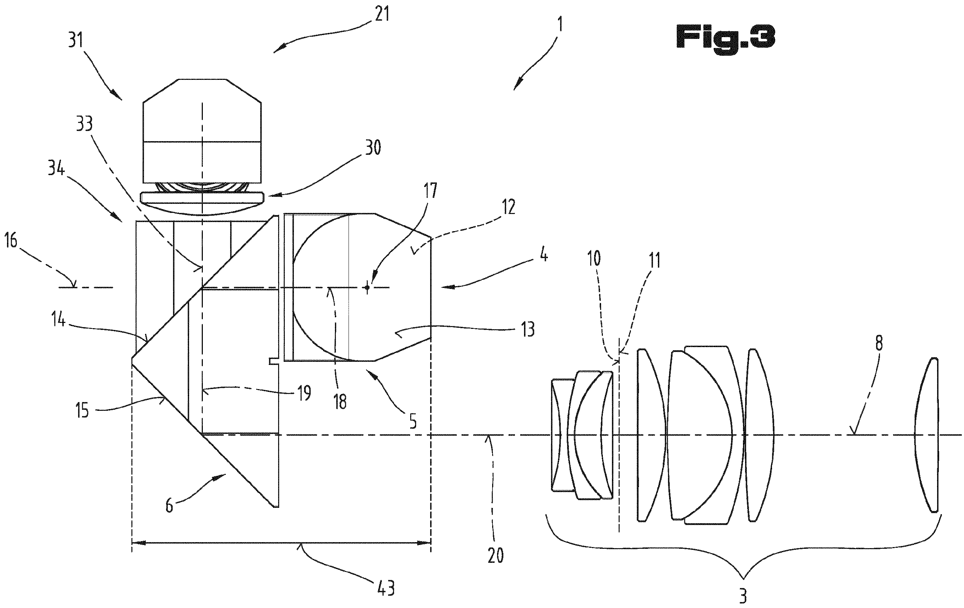

Durch Verstellen der Fokussiereinrichtung 9 kann erreicht werden, dass eine von dem Objektiv erzeugte Bildebene 10 entfernter Objekte mit einer Brennebene 11 des Okulars 3 zusammenfallend zu liegen kommt (Fig. 3).

Aufgrund der Ausbildung des Prismen-Umkehrsystems 4 durch ein Porro-Prismensystem mit einer ersten und zweiten Reflexionsfläche 12, 13 des ersten Umlenkprismas 5 und mit einer ersten und zweiten Reflexionsfläche 14, 15 des zweiten Umlenkprismas 6, kann der Beobachtungsstrahlengang des Fernrohrs 1 als eine zusammenhängende Abfolge von insgesamt fünf Hauptstrahl-Abschnitten beschrieben werden. Es sind dies ein erster Hauptstrahl-Abschnitt 16 vom Objektiv 2 bis zur ersten Reflexionsfläche 12 des Umlenkprismas 5, ein zweiter Hauptstrahl-Abschnitt 17 zwischen der ersten Reflexionsfläche 12 und der zweiten Reflexionsfläche 13 des Umlenkprismas 5, ein dritter Hauptstrahl-Abschnitt 18 zwischen der zweiten Reflexionsfläche 13 des ersten Umlenkprismas 5 und der ersten Reflexionsfläche 14 des zweiten Umlenkprismas 6, ein vierter Hauptstrahl-Abschnitt 19 zwischen erster und zweiter Reflexionsfläche 14, 15 des zweiten Umlenkprismas 6 und schließlich ein fünfter Hauptstrahlabschnitt 20 zwischen der zweiten Reflexionsfläche 15 des zweiten Umlenkprismas 6 und dem Okular 3. Dabei sind der erste, der dritte und der fünfte Hauptstrahl-Abschnitt 16, 18, 20 parallel zueinander ausgerichtet, wohingegen der zweite und der vierte Hauptstrahl-Abschnitt 17, 19 rechtwinkelig relativ zu den Hauptstrahl-Abschnitten 16, 18, 20 ausgerichtet sind. Der zweite und der vierte Hauptstrahl-Abschnitt 17, 19 sind zueinander ebenfalls rechtwinkelig ausgerichtet.

Neben den beschriebenen, optischen Elementen des Beobachtungs-Strahlenganges weist das erfindungsgemäße Fernrohr 1 zusätzlich eine separate Projektionsoptik 21 mit einem eigenen Strahlengang, in dem eine Maske 22 angeordnet ist, auf. Die Maske 22 ist als Negativ eines Musters einer Strichplatte ausgebildet und kann so durch rückwärtige Beleuchtung mit einer Lichtquelle 23 ein selbstleuchtendes Strichbild einer Strichplatte erzeugt werden.

Der Strahlengang der Projektionsoptik 21 ist mit dem Beobachtungsstrahlengang des Fernrohrs 1 durch einen Strahlenteiler verbunden, sodass ein Bild der Maske 22 in den Beobachtungsstrahlengang projiziert bzw. eingeblendet werden kann. Dazu wird durch die Projektionsoptik 21 ein Bild der Maske 22 in die Bildebene 10 bzw. in die Brennebene 11 des Okulars 3 abgebildet (Fig. 3). Durch das Okular 3 wird einem Beobachter schließlich eine Überlagerung eines Bildes der entfernten Objekte und eines selbstleuchtenden Strichmusters entsprechend einer Strichplatte dargestellt.

Die Lichtquelle 23 der Projektionsoptik 21 wird vorzugsweise durch eine, rotes Licht emittierende LED gebildet (mit einer dominanten Wellelänge im Bereich 600 nm bis 650 nm). Zwischen der Lichtquelle 23 und der Maske 22 sind eine Streuscheibe 24 und eine asphärische Kondensor-Linse 25 angeordnet durch die hindurch die Maske 22 beleuchtet wird. Die Maske 22 wird vorzugsweise durch eine mit Chrom beschichtete planparallele Glasplatte gebildet, wobei nur die den Strichen entsprechenden Flächenbereiche unbeschichtet sind und somit nur durch diese Licht hindurchtreten kann. Die durch die Maske 22 hindurchtretenden Lichtstrahlen werden durch ein Projektionslinsensystem aus mehreren Linsen 26, 27, 28, 29, 30 weiter abgebildet. In dem Strahlengang der Projektionsoptik 21 ist außerdem auch noch ein Umlenkprisma 31 angeordnet, sodass der Strahlengang insgesamt einen ersten Hauptstrahl-Abschnitt 32 und nach Umlenkung an dem Umlenkprisma 31 einen zweiten Hauptstrahl-Abschnitt 33 umfasst. Der Strahlengang der Projektionsoptik 21 hat somit einen abgewinkelten Verlauf. Der zweite Hauptstrahl-Abschnitt 33 des Strahlengangs der Projektionsoptik 21 wird schließlich mit Hilfe eines Koppelprismas 34, das zusammen mit dem zweiten Umlenkprisma 6 als Strahlenteiler fungiert, in den Beobachtungsstrahlengang des Fernrohrs 1 überführt.

Es erweist sich als vorteilhaft, die Projektionsoptik 21 in dem Fernrohr 1 derart anzuordnen, dass ihr erster Hauptstrahlabschnitt 32 und ihr zweiter Hauptstrahlabschnitt 33 sich jeweils in einer bezüglich der optischen Achse 7 des Objektivs 2 senkrecht ausgerichteten Lage befinden. Der Übergang des Strahlengangs der Projektionsoptik 21 in den Beobachtungsstrahlengang des Fernrohrs 1 erfolgt günstigerweise an der ersten Reflexionsfläche 14 des zweiten Umlenkprismas 6 des Prismen-Umkehrsystems 4. Dazu ist die Projektionsoptik 21 derart angeordnet, dass ihr zweiter Hauptstrahlabschnitt 33 parallel bzw. koaxial relativ zu dem zwischen der ersten Reflexionsfläche 14 und der zweiten Reflexionsfläche 15 des zweiten Umlenkprismas 6 verlaufenden vierten Hauptstrahlabschnitt 19 ausgerichtet ist. Der Eintritt des von der Projektionsoptik 21 kommenden Lichts in das zweite Umlenkprisma 6 des Porro-Prismensystems erfolgt durch das Koppelprisma 34 hindurch, das mit der ersten Reflexionsfläche 14 des zweiten Umlenkprismas 6 verbunden bzw. an dieser aufgekittet ist. Die Reflexionsfläche 14 ist dazu als Strahlenteiler ausgebildet, in dem an dieser eine teildurchlässige Beschichtung vorgesehen ist. Diese teildurchlässige Beschichtung ist derart ausgeführt, dass ein Großteils des Lichtes des Beobachtungsstrahlenganges reflektiert wird (typischerweise Licht im Bereich < 600nm) und von der die Lichtquelle 23 bildenden LED kommendes Licht hindurchtreten kann.

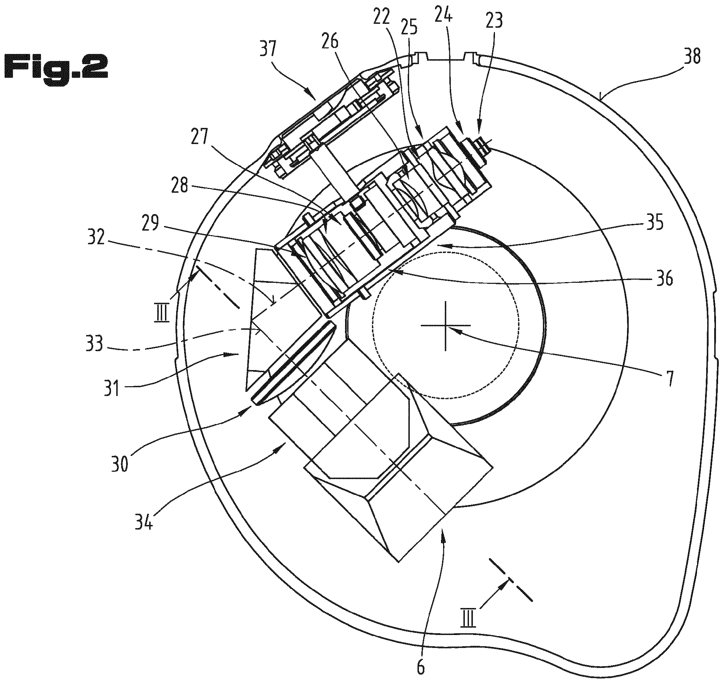

Die Fig. 2 zeigt einen Querschnitt des Fernrohrs 1 mit einer Blickrichtung parallel zur optischen Achse 7 des Objektivs 2 mit Details der Projektionsoptik 21. Wie der Darstellung zu entnehmen ist, ist ein Teil der optischen Elemente der Projektionsoptik 21 in einem Tubus 35 mechanisch gehaltert. Dabei ist die Linsengruppe der Linsen 27, 28, 29 in einem Schlitten 36 befestigt, der in axialer Richtung, das heißt in Richtung des Hauptstrahlabschnitts 32 verstellbar ist. Der Schlitten 36 mit den Linsen 27, 28, 29 bildet somit eine Fokussiereinrichtung der Projektionsoptik 21. Mit Hilfe dieser Fokussiereinrichtung der Projektionsoptik 21 kann erreicht werden, dass das Bild der Maske 22 gemeinsam mit dem Bild eines entfernen Objekts in der gleichen Bildebene 10 des Objektivs 2 scharf abgebildet wird (Fig. 3). Die Fokussiereinrichtung mit den Linsen 27, 28, 29 hat somit die Funktion eines Dioptrien-Ausgleichs für das Fernrohr 1. Zur Verstellung des Schlittens 36 der Fokussiereinrichtung der Projektionsoptik 21 ist eine Stellschraube 37 vorgesehen, die mit dem Schlitten 36 wirkverbunden ist. Die Stellschraube 37 ist dazu an einer Außenseite eines Gehäuses 38 des Fernrohrs 1 angeordnet, sodass die Fokussiereinrichtung der Projektionsoptik 21 von außen bedient bzw. eingestellt werden kann. Die Bedienung der Stellschraube 37 erfolgt in diesem Ausführungsbeispiel über einen Schlitz in der Stellschraube 37, in den eine Münze oder ein Schraubendreher oder Ähnliches eingreifen kann. Die Stellschraube 37 kann aber auch als Drehknopf zur direkten manuellen Verstellung ausgeführt sein.

Die Fig. 3 zeigt einen Querschnitt des Prismen-Umkehrsystems 4 mit der Projektionsoptik 21 und dem Okular 3 gemäß Fig. 2. Die Lichtstrahlen des Beobachtungsstrahlengangs verlaufen von dem Objektiv 2 kommend über den ersten Hauptstrahl-Abschnitt 16 und nach Umlenkung durch die beiden Umlenkprismen 5, 6 des Prismen-Umkehrsystems 4 über den fünfen Hauptstrahl-Abschnitt 20 schließlich zu dem Okular 3. Das Koppelprisma 34 der Projektionsoptik 21 ist an der ersten Reflexionsfläche 14 des zweiten Umlenkprismas 6 mit diesem verbunden. Die Reflexionsfläche 14 des zweiten Umlenkprismas 6 stellt damit den Übergangsbereich des Strahlengangs der Projektionsoptik 21 in den Beobachtungsstrahlengang des Fernrohres 1 dar. In diesem Übergangsbereich, die mit einer teildurchlässigen Beschichtung versehen ist, wirkt die Reflexionsfläche 14 des zweiten Umlenkprismas 6 gleichzeitig als Strahlenteiler. Das Licht der Lichtquelle 23 wird selektiv durch diesen Strahlenteiler hindurchgelassen, sodass sich der Strahlengang der Projektionsoptik 21 von dessen zweitem Hauptstrahl-Abschnitt 33 kommend mit dem vierten Hauptstrahl-Abschnitt 19 in dem zweiten Umlenkprisma 6 vereinigen kann. Der Übergang des Strahlengangs der Projektionsoptik 21 für die Maske 22 der Strichplatte ist somit derart gestaltet, dass der Strahlengang der Projektionsoptik 21 in dem Übergangsbereich an der Reflexionsfläche 14 parallel und insbesondere koaxial relativ zu dem vierten Hauptstrahl-Abschnitt 19 im zweiten Umlenkprisma 6 ausgerichtet ist. Damit ist insgesamt gewährleistet, dass der zweite Hauptstrahl-Abschnitt 33 der Projektionsoptik 21 senkrecht relativ zu der optischen Achse 8 des Okulars 3, das heißt insgesamt senkrecht bezüglich der Längserstreckung des Fernrohr 1, ausgerichtet ist.

Betrachtet man die Baulänge der optischen Elemente bezüglich einer zu der optischen Achse 8 des Okulars 3 (bzw. zu der optischen Achse 7 des Objektivs 2) parallelen Richtung, so erkennt man, dass eine Baulänge des Ensembles aus Prismen-Umkehrsystem 4 und Projektionsoptik 21 im Wesentlichen beschränkt ist auf einen Bereich einer Baulänge 43 des Prismen-Umkehrsystems 4. Die Baulänge des Ensembles aus Prismen-Umkehrsystem 4 und Projektionsoptik 21 kann somit relativ kurz gehalten werden. Dieser Umstand ermöglicht insgesamt eine modulartige Strukturierung des Fernrohrs 1 mit einem dem Objektiv 2 zugeordneten Abschnitt einerseits, einem dem Okular 3 zugeordneten Abschnitt andererseits und einem dazwischen liegenden Mittelteil in dem die optischen Elemente des Prismen-Umkehrsystems 4, der Projektionsoptik 21 für die Maske 22 als auch der hierzu erforderlichen Elektrik bzw. Elektronik enthalten sind.

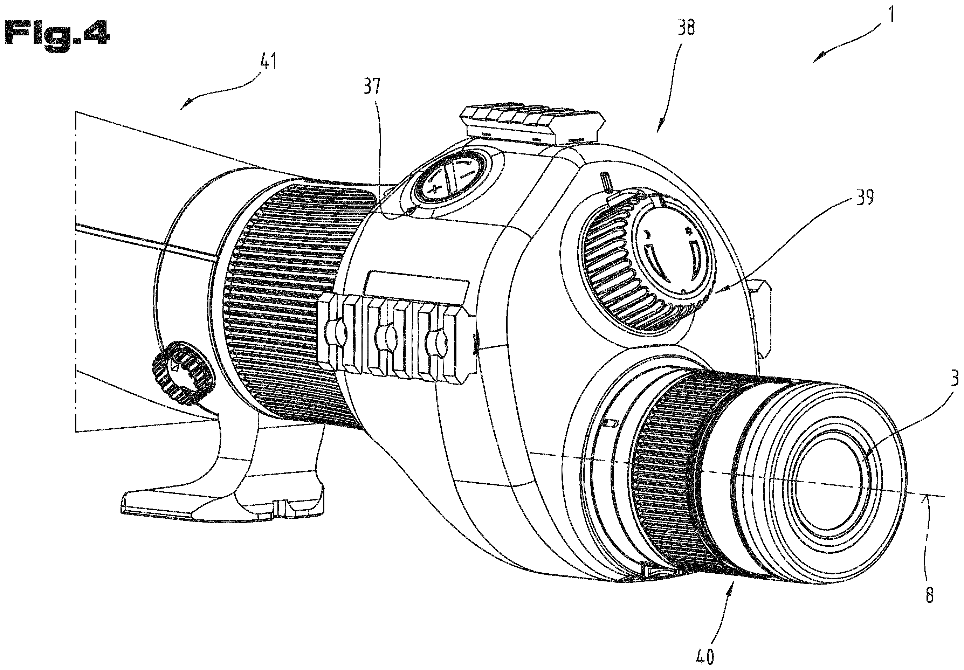

Die Fig. 4 zeigt den okularseitigen Endbereich des Fernrohrs 1 in perspektivischer Ansicht. Außen am Gehäuse 38 ist die Stellschraube 37 für die Fokussiereinrichtung der Projektionsoptik 21 zu erkennen. Am Gehäuse 38 des Fernrohrs 1 ist weiters ein Bedienknopf 39 zur Steuerung der Lichtquelle 23 der Projektionsoptik 21 vorgesehen. Mit dem Bedienknopf 39 kann die Lichtquelle 23 ein- bzw. ausgeschaltet werden; mit dem Bedienknopf 39 ist aber auch eine Helligkeitsregelung der Lichtquelle 23 möglich. Schließlich ist an dem Gehäuse 38 des Fernrohrs 1 ein Okulargehäuse 40 mit dem Okular 3 angeordnet. Gemäß diesem Ausführungsbeispiel ist das Okular 3 als Zoom-Okular ausgebildet (Fig. 3). Die Brennweite des Okulars 3 kann somit über einen Bereich kontinuierlich variiert werden, sodass die Gesamtvergrößerung des Fernrohrs 1 ebenfalls über einen entsprechenden Bereich verstellbar ist. Das Okular 3 bzw. das Okulargehäuse 40 ist darüber hinaus auswechselbar.

Das Fernrohr 1 ist insgesamt modular aufgebaut, wobei das Gehäuse 38 einen Mittelteil bildet, mit dem einerseits das Okulargehäuse 40 und andererseits ein Objektiv-Tubus 41 mit dem Objektiv 2 auswechselbar verbunden sind. Das Gehäuse 38 vereinigt somit in sich das Prismen-Umkehrsystem 4 mit der daran angekoppelten Projektionsoptik 21 für die Maske 22 zur Darstellung eines Strichplattenbildes als auch eine Stromquelle und die nötigen elektrischen Einrichtungen (nicht dargestellt) zur Steuerung der Lichtquelle 23 mit Hilfe des Bedienkopfs 39.

Die Anordnung der Projektionsoptik 21 in abgewinkelter Form, d.h. mit einem ersten Hauptstrahl-Abschnitt 32 und einem zweiten Hauptstrahlabschnitt 33, die tangential an einem Durchgangskanal 42 des Beobachtungsstrahlenganges anliegen, ermöglicht einen kompakten Aufbau des mittleren Gehäuses 38. Diese Anordnung der Projektionsoptik 21 hat insbesondere den Vorteil, dass die Längserstreckung des Gehäuses 38 bezüglich der optischen Achse 7 des Objektivs 2 kurz gehalten werden kann.

Die Ausführungsbeispiele zeigen mögliche Ausführungsvarianten des Fernrohrs, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Der Ordnung halber sei abschließend darauf hingewiesen, dass zum besseren Verständnis des Aufbaus des Fernrohrs dieses bzw. dessen Bestandteile teilweise unmaßstäblich und/oder vergrößert und/oder verkleinert dargestellt wurden.

**Bezugszeichenaufstellung**

| | | | |
|---|---|---|---|
| 1 | Fernrohr | 31 | Umlenkprisma |
| 2 | Objektiv | 32 | Hauptstrahl-Abschnitt |
| 3 | Okular | 33 | Hauptstrahl-Abschnitt |
| 4 | Prismen-Umkehrsystem | 34 | Koppelprisma |
| 5 | Umlenkprisma | 35 | Tubus |
| 6 | Umlenkprisma | 36 | Schlitten |
| 7 | Optische Achse | 37 | Stellschraube |
| 8 | Optische Achse | 38 | Gehäuse |
| 9 | Fokussiereinrichtung | 39 | Bedienknopf |
| 10 | Bildebene | 40 | Okulargehäuse |
| 11 | Brennebene | 41 | Objektiv-Tubus |
| 12 | Reflexionsfläche | 42 | Durchgangskanal |
| 13 | Reflexionsfläche | 43 | Baulänge |
| 14 | Reflexionsfläche | | |
| 15 | Reflexionsfläche | | |
| 16 | Hauptstrahl-Abschnitt | | |
| 17 | Hauptstrahl-Abschnitt | | |
| 18 | Hauptstrahl-Abschnitt | | |
| 19 | Hauptstrahl-Abschnitt | | |
| 20 | Hauptstrahl-Abschnitt | | |
| 21 | Projektionsoptik | | |
| 22 | Maske | | |
| 23 | Lichtquelle | | |
| 24 | Streuscheibe | | |
| 25 | Kondensor-Linse | | |
| 26 | Linse | | |
| 27 | Linse | | |
| 28 | Linse | | |
| 29 | Linse | | |
| 30 | Linse | | |

## Patentansprüche

1. Fernrohr (1) mit einem Objektiv (2), einem Okular (3) und einem Prismen-Umkehrsystem (4) und mit einem zwischen dem Objektiv (2) und dem Okular (3) verlaufenden Beobachtungs-Strahlengang, in dem das Prismen-Umkehrsystem (4) angeordnet ist, und mit einer Projektionsoptik (21) mit einem Strahlengang zur Abbildung eines Bildes einer Strichplatte in eine Brennebene des Okulars (3), wobei der Strahlengang der Projektionsoptik (21) durch einen Strahlenteiler mit dem Beobachtungs-Strahlengang verbunden ist, wobei die Projektionsoptik (21) eine Lichtquelle (23) und mehrere Linsen (27, 28, 29) umfasst, **dadurch gekennzeichnet, dass** die Projektionsoptik (21) eine als Negativ eines Musters der Strichplatte ausgebildete Maske (22) umfasst, wobei die Lichtquelle (23) zur rückwärtigen Beleuchtung der Maske (22) angeordnet ist, und wobei die Projektionsoptik (21) eine von einer Außenseite eines Gehäuses (38) einstellbare Fokussiereinrichtung umfasst, durch die die Lage der Bildebene der Abbildung des Musters der Strichplatte (22) relativ zur Lage der Bildebene (10) des Objektivs (2) bzw. relativ zur Lage der Brennebene (11) des Okulars (3) verschoben werden kann, wobei die Fokussiereinrichtung durch einen in axialer Richtung des Strahlengangs der Projektionsoptik (21) verstellbaren Schlitten (36) gebildet ist, in dem die Linsen (27, 28, 29) befestigt sind, und wobei zur Verstellung des Schlittens (36) an der Außenseite des Gehäuses (38) eine Stellschraube (37) oder ein Drehknopf angeordnet ist.

2. Fernrohr (1) nach Anspruch 1, **dadurch gekennzeichnet, dass** die Maske (22) eine planparallele Glasplatte mit einer opaken Beschichtung aufweist, wobei die Glasplatte transparente Bereiche mit der Form eines Negativs eines Musters der Strichplatte aufweist.

3. Fernrohr (1) nach einem der vorhergehenden Ansprüche, **dadurch gekennzeichnet, dass** ein Bedienknopf (39) zum Ein- und Aus-Schalten und zur Regelung der Helligkeit der Lichtquelle (23) ausgebildet ist.

4. Fernrohr (1) nach einem der vorhergehenden Ansprüche, **dadurch gekennzeichnet, dass** der Strahlengang der Projektionsoptik (21) einen ersten Hauptstrahl-Abschnitt (32) und einen zweiten Hauptstrahl-Abschnitt (33) aufweist, wobei der erste Hauptstrahl-Abschnitt (32) und der zweite Hauptstrahl-Abschnitt (33) durch ein Umlenkprisma (31) miteinander verbunden sind, und wobei der erste Hauptstrahl-Abschnitt (32) und der zweite Hauptstrahl-Abschnitt (33) senkrecht bezüglich einer optischen Achse (7) des Objektivs (2) ausgerichtet sind.

5. Fernrohr (1) nach einem der vorhergehenden Ansprüche, **dadurch gekennzeichnet, dass** der Strahlenteiler an einem Übergangsbereich zwischen einem Koppelprisma (34) der Projektionsoptik (21) und dem Prismen-Umkehrsystem (4) des Beobachtungs-Strahlengangs ausgebildet ist.

6. Fernrohr (1) nach Anspruch 5, **dadurch gekennzeichnet, dass** das Koppelprisma (34) an einem Umlenkprisma (5, 6) des Prismen-Umkehrsystems (4) angekittet ist und an einer Grenzfläche zwischen dem Koppelprisma (34) und dem Umlenkprisma (5, 6) des Prismen-Umkehrsystems (4) eine teildurchlässige Beschichtung ausgebildet ist.

7. Fernrohr (1) nach einem der vorhergehenden Ansprüche, **dadurch gekennzeichnet, dass** das Prismen-Umkehrsystem (4) ein Porro-Prismensystem erster Art mit einem ersten Umlenkprisma (5) und mit einem zweiten Umlenkprisma (6) umfasst, wobei das erste Umlenkprisma (5) zur Umlenkung des Beobachtungs-Strahlengangs von einem ersten Hauptstrahl-Abschnitt (16) in einen zweiten Hauptstrahl-Abschnitt (17) und von dem zweiten Hauptstrahl-Abschnitt (17) in einem dritten Hauptstrahl-Abschnitt (18) angeordnet ist, und wobei das zweite Umlenkprisma (6) zur Umlenkung des Beobachtungs-Strahlengangs von dem dritten Hauptstrahl-Abschnitt (18) in einen vierten Hauptstrahl-Abschnitt (19) und von dem vierten Hauptstrahl-Abschnitt (19) in einem fünften Hauptstrahl-Abschnitt (20) angeordnet ist.

8. Fernrohr (1) nach Anspruch 7, **dadurch gekennzeichnet, dass** das Koppelprisma (34) an einer ersten Reflexionsfläche (14) des zweiten Umlenkprismas (6) angeordnet ist, wobei der zweite Hauptstrahl-Abschnitt (33) des Strahlengangs der Projektionsoptik (21) koaxial zu dem in dem zweiten Umlenkprisma (6) verlaufenden, vierten Hauptstrahl-Abschnitt (19) des Beobachtungs-Strahlengangs gerichtet ist.

9. Fernrohr (1) nach Anspruch 7, **dadurch gekennzeichnet, dass** das Koppelprisma (34) an einer ersten Reflexionsfläche (12) des ersten Umlenkprismas (5) angeordnet ist, wobei der zweite Hauptstrahl-Abschnitt (33) des Strahlengangs der Projektionsoptik (21) koaxial zu dem in dem ersten Umlenkprisma (5) verlaufenden, zweiten Hauptstrahl-Abschnitt (19) des Beobachtungs-Strahlengangs gerichtet ist.

10. Fernrohr (1) nach einem der vorhergehenden Ansprüche, **dadurch gekennzeichnet, dass** im Beobachtungs-Strahlengang zwischen Objektiv (2) und Prismen-Umkehrsystem (4) eine Fokussiereinrichtung (9) angeordnet ist.

11. Fernrohr (1) nach einem der vorhergehenden Ansprüche, **dadurch gekennzeichnet, dass** das Okular (3) ein Zoom-Linsensystem umfasst.

## Claims

1. A telescope (1) comprising an objective lens (2), an eyepiece (3) and a prism erecting system (4) and having an observation beam path running between the objective lens (2) and the eyepiece (3) in which the prism erecting system (4) is disposed, and having projection optics (21) with a beam path for reproducing an image of a reticle in a focal plane of the eyepiece (3), wherein the beam path of the projection optics (21) is coupled to the observation beam path by means of a beam splitter, wherein the projection optics (21) comprise a light source (23) and several lenses (27, 28, 29), **characterized in that** the projection optics (21) comprise a mask (22) designed as a negative of a pattern of the reticle, wherein the light source (23) is disposed for rearward illumination of the mask (22), and wherein the projection optics (21) comprise a focusing device adjustable from an external face of a housing (28), by means of which focusing device the position of the image plane of the reproduction of the pattern of the reticle (22) can be shifted relative to the position of the image plane (10) of the objective lens (2) and/or relative to the position of the focal plane (11) of the eyepiece (3), wherein the focusing device is formed by a carriage (36) adjustable in the axial direction of the beam path of the projection optics (21), the lenses (27, 28, 29) being secured in said carriage (36), and wherein for adjusting the carriage (36), an adjusting screw (37) or a rotary knob is disposed on the external face of the housing (38).

2. The telescope (1) according to claim 1, **characterized in that** the mask (22) comprises a plane-parallel glass plate with an opaque coating, wherein the glass plate has transparent regions in the form of a negative of a pattern of the reticle.

3. The telescope (1) according to one of the preceding claims, **characterized in that** a control button (39) is provided as a means of switching the light source (23) on and off and regulating the brightness thereof.

4. The telescope (1) according to one of the preceding claims, **characterized in that** the beam path of the projection optics (21) has a first main beam portion (32) and a second main beam portion (33), wherein the first main beam portion (32) and the second main beam portion (33) are coupled to one another by a deflecting prism (31), and wherein the first main beam portion (32) and the second main beam portion (33) are oriented perpendicular to an optical axis (7) of the objective lens (2).

5. The telescope (1) according to one of the preceding claims, **characterized in that** the beam splitter is disposed in a transition region between a coupling prism (34) of the projection optics (21) and the prism erecting system (4) of the observation beam path.

6. The telescope (1) according to claim 5, **characterized in that** the coupling prism (34) is cemented to a deflecting prism (5, 6) of the prism erecting system (4) and a partially transparent coating is disposed on a boundary surface between the coupling prism (34) and the deflecting prism (5, 6) of the prism erecting system (4).

7. The telescope (1) according to one of the preceding claims, **characterized in that** the prism erecting system (4) is a Porro prism system of the first type comprising a first deflecting prism (5) and a second deflecting prism (6), wherein the first deflecting prism (5) is disposed so as to deflect the observation beam path from a first main beam portion (16) to a second main beam portion (17) and from the second main beam portion (17) to a third main beam portion (18), and wherein the second deflecting prism (6) is disposed so as to deflect the observation beam path from the third main beam portion (18) to a fourth main beam portion (19) and from the fourth main beam portion (19) to a fifth main beam portion (20).

8. The telescope (1) according to claim 7, **characterized in that** the coupling prism (34) is disposed on a first reflection surface (14) of the second deflecting prism (6), wherein the second main beam portion (33) of the beam path of the projection optics (21) is directed coaxially with the fourth main beam portion (19) of the observation beam path extending in the second deflecting prism (6).

9. The telescope (1) according to claim 7, **characterized in that** the coupling prism (34) is disposed on a first reflection surface (12) of the second deflecting prism (5), wherein the second main beam portion (33) of the beam path of the projection optics (21) is directed coaxially with the second main beam portion (19) of the observation beam path extending in the first deflecting prism (5).

10. The telescope (1) according to one of the preceding claims, **characterized in that** a focusing device (9) is disposed in the observation beam path between the objective lens (2) and the prism erecting system (4).

11. The telescope (1) according to one of the preceding claims, **characterized in that** the eyepiece (3) comprises a zoom lens system.

## Revendications

1. Télescope (1) avec un objectif (2), un oculaire (3) et un système d'inversion à prismes (4) et avec un trajet de faisceau d'observation s'étendant entre l'objectif (2) et l'oculaire (3), dans lequel le système d'inversion à prismes (4) est disposé, et avec une optique de projection (21) avec un trajet de faisceau pour la représentation d'une image d'un réticule dans un plan focal de l'oculaire (3), le trajet de rayons de l'optique de projection (21) étant relié par l'intermédiaire d'un diviseur de faisceau avec le trajet de faisceau d'observation, l'optique de projection (21) comprenant une source de lumière (23) et plusieurs lentilles (27, 28, 29), **caractérisé en ce que** l'optique de projection (21) comprend un masque (22) conçu comme le négatif d'un motif du réticule, la source de lumière (23) étant disposée pour l'éclairage arrière du masque (22) et l'optique de projection (21) comprenant un dispositif de focalisation réglable de l'extérieur d'un boîtier (38), par l'intermédiaire duquel la position du plan focal de représentation du motif du réticule (22) peut être déplacée par rapport à la position du plan d'image (10) de l'objectif (2) ou par rapport à la position du plan focal (11) de l'oculaire (3), le dispositif de focalisation étant constitué d'un chariot (36) mobile dans la direction axiale du trajet de faisceau de l'optique de projection (21), dans lequel sont fixées les lentilles (27, 28, 29), et, pour le déplacement du chariot (36), une vis de réglage (37) ou une tête rotative est disposée sur l'extérieur du boîtier (38).

2. Télescope (1) selon la revendication 1, **caractérisé en ce que** le masque (22) comprend une plaque de verre plane parallèle avec un revêtement opaque, la plaque de verre comprenant des zones transparentes avec la forme d'un négatif d'un motif du réticule.

3. Télescope (1) selon l'une des revendications précédentes, **caractérisé en ce qu'**une tête de commande (39) est conçue pour la mise en marche, l'arrêt et le réglage de la luminosité de la source de lumière (23).

4. Télescope (1) selon l'une des revendications précédentes, **caractérisé en ce que** le trajet de faisceau de l'optique de projection (21) comprend une première portion de faisceau principal (32) et une deuxième portion de faisceau principal (33), la première portion de faisceau principal (32) et la deuxième portion de faisceau principal (33) étant reliées entre elles par un prisme d'inversion (31) et la première portion de faisceau principal (32) et la deuxième portion de faisceau principal (33) étant orientées perpendiculairement par rapport à un axe optique (7) de l'objectif (2).

5. Télescope (1) selon l'une des revendications précédentes, **caractérisé en ce que** le diviseur de faisceau est réalisé au niveau d'une zone de transition entre un prisme de couplage (34) de l'optique de projection (21) et le système d'inversion à prismes (4) du trajet de faisceau d'observation.

6. Télescope (1) selon la revendication 5, **caractérisé en ce que** le prisme de couplage (34) est collé à un prisme de déviation (5, 6) du système d'inversion à prismes (4) et, sur une surface limite entre le prisme de couplage (34) et le prisme de déviation (5, 6) du système d'inversion à prismes (4), est réalisé un revêtement partiellement transparent.

7. Télescope (1) selon l'une des revendications précédentes, **caractérisé en ce que** le système d'inversion à prismes (4) est un système de prismes de Porro du premier type avec un premier prisme de déviation (5) et avec un deuxième prisme de déviation (6), le premier prisme de déviation (5) étant disposé pour la déviation du trajet de faisceau d'observation d'une première portion de faisceau principal (16) vers une deuxième portion de faisceau principal (17) et de la deuxième portion de faisceau principal (17) vers une troisième portion de faisceau principal (18), et le deuxième prisme de déviation (6) étant disposé pour la déviation du trajet de faisceau d'observation de la troisième portion de faisceau principal (18) vers une quatrième portion de faisceau principal (19) et de la quatrième portion de faisceau principal (19) vers une cinquième portion de faisceau principal (20).

8. Télescope (1) selon la revendication 7, **caractérisé en ce que** le prisme de couplage (34) est disposé sur une première surface de réflexion (14) du deuxième prisme de déviation (6), la deuxième portion de faisceau principal (33) du trajet de faisceau de l'optique de projection (21) étant orientée de manière coaxiale par rapport à la quatrième portion de faisceau principal (19) du trajet de faisceau d'observation, s'étendant dans le deuxième prisme de déviation (6).

9. Télescope (1) selon la revendication 7, **caractérisé en ce que** le prisme de couplage (34) est disposé sur une première surface de réflexion (12) du premier prisme de déviation (5), la deuxième portion de faisceau principal (33) du trajet de faisceau de l'optique de projection (21) étant orientée de manière coaxiale par rapport à la deuxième portion de faisceau principal (19) du trajet de faisceau d'observation, s'étendant dans le premier prisme de déviation (5).

10. Télescope (1) selon l'une des revendications précédentes, **caractérisé en ce que**, dans le trajet de faisceau d'observation, entre l'objectif (2) et le système d'inversion à prismes (4), est disposé un dispositif de focalisation (9).

11. Télescope (1) selon l'une des revendications précédentes, **caractérisé en ce que** l'oculaire (3) comprend un système de lentilles de zoom.
